# EUROPÄISCHE PATENTSCHRIFT

(11) **EP 0 643 654 B1**
(45) Veröffentlichungstag und Bekanntmachung des Hinweises auf die Patenterteilung: **21.01.1998**
(21) Anmeldenummer: 93907738.4
(22) Anmeldetag: 08.04.1993
(51) Int. Cl.: B62B 13/12

(54) **RODELSCHLITTEN MIT KUFEN**
TOBOGGAN WITH RUNNERS
LUGE AVEC PATINS

(43) Veröffentlichungstag der Anmeldung: 22.03.1995
(73) Patentinhaber: LEMITEG LEBENSMITTEL- UND FREIZEITTECHNIK GMBH, D-75240 Neuhausen/Enzkreis (DE)
(72) Erfinder: Wenger, Peter, 3937 Baltschieder (CH)
(74) Vertreter: Twelmeier, Ulrich, Dipl.Phys.
(86) Internationale Anmeldenummer: CH9300094
(87) Internationale Veröffentlichungsnummer: WO9423983

(56) Entgegenhaltungen:
- DE-A- 3 606 656
- US-A- 2 006 328
- US-A- 3 519 284

## Beschreibung

Die Erfindung betrifft einen Rodelschlitten mit Kufen gemäß dem Oberbegriff des Anspruchs 1.

Ein derartiger Rodelschlitten ist aus der DE-A1 36 06 656 bekannt. In dieser Druckschrift ist eine Kufe für Ski, Skibob, Schlitten, Rennrodler, Tragflügelboote, Wasseflugzeuge oder dergleichen Gleiter beschrieben, die aus mindestens einer auf einem gleitfähigen Untergrund leicht rutschbaren längeren Schiene besteht und mit einem Trag- und/oder Sitzelement beweglich verbunden ist. Hierbei ist vorgesehen, daß zumindest die Sohle der Kufe über ihre Länge zum Lenken des Schlittens parallel zum Untergrund gezielt verbiegbar ist.

Desweiteren sind Schlitten zum gleitenden Fahren auf einem gleitfähigen Boden, insbesondere auf einem festen Schneeboden, bekannt. Schiffen werden zum gleitenden Fahren auf einem gleitfähigen Boden, insbesondere auf einer festen Schneedecke verwendet. Bei den bekannten Schlitten drückt zum Lenken der Schlittenfaher seinen Schuh bremsend gegen die Schlittenfahrbahn, wodurch der Schlitten in Richtung der Seite, an der gebremst wird, gezogen wird. Es sind auch Schlitten bekannt, welche in Längsrichtung zweigeteilte Kufen aufweisen, bei denen das vordere Kufenpaar seitlich über eine Lenkeinrichtung ausschwenkbar angeordnet ist. Der Schlitten fährt dann jeweils in die Richtung, in welche die voerderen Enden des ausgelenkten Kufenpaares zeigen.

Die beiden o.g. Lenkungsarten haben den Nachteil, daß zum Lenken kinetische Energie des Schlittens vernichtet wird, d.h. es erfolgt ungewollt eine Geschwindigkeitsreduzierung des Schlittens, wobei der Energieverlust bei schwenkbaren Kufenteilen durch das seitliche Verrutschen des in Fahrtrichtung hinteren Kufenpaares verursacht wird.

Die Erfindung liegt die Aufgabe zugrunde, einen Rodelschlitten zu schaffen, der nahezu ohne Verlust von kinetischer Energie lenkbar und auf einfache Art und Weise zum Stillstand bringbar ist.

Diese Aufgabe wird ausgehend von dem Oberbegriff des Anspruchs 1 durch dessen kennzeichnenden Merkmale gelöst. Bevorzuge Ausführungsformen sind in den Patentansprüchen 2 bis 9 beschrieben.

Durch ein Verformen der Kufen zum Kurvenfahren wird die gesamte Gleitfläche des Schlittens näherungsweise dem zu fahrenden Kurvenradius angepaßt, wobei diese Anpassung nahezu vollständig ist, sofern die Kufen jeweils vorn und hinten am Schliffengrundkörper gelagert sind, eine der Lagerungen der jeweils beiden Lagerpaare in Kufenlängsrichtung verschiebbar ist und die die Kufenverbiegung erzeugende Biegekraft annähernd in der Kufenmitte senkrecht in Fahrtrichtung und parallel zur Schlittenfahrbahnoberfläche angreift. Die Auslenkung der elastischen Kufen ist, da es sich um eine elastische Verformung bei einer gegenüber der Kufenlänge nur geringen Auslenkung handelt, in erster Näherung eine kreisförmige Verformung und entspricht damit in idealer Weise dem zu fahrenden Kurvenradius.

Weisen die Kufen eine ausreichende Fähigkeit zur Längsdehnung auf, so können sie in den Lagerungen in Längsrichtung unverschiebbar angeordnet werden. Die seitliche Kufenverbiegung ist dann zur Erzeugung des Kurvenradius nicht mehr ideal, jedoch noch ausreichend gut für die Lenkung des Schlittens unter nur geringen kinetischen Energieverlusten.

Die Auslenkung erfolgt vorzugsweise mit einem gut handhabbaren, über die Schlittenoberfläche hinausragenden Schwenkhebel, der mit einer federbehafteten Bremseinrichtung derart gekoppelt ist, daß bei dessen Loslassen ein Bremselement zwischen den Kufen nach unten gegen den Schnee zur Zwangsbremsung gedrückt wird. Steht nun der Schwenkhebel für die selbsttätige Zwangsbremsung vertikal nach oben, so wirkt er beim Umstürzen des Schlittens als weiteres Bremselement auf der Schneeoberfläche.

Im folgenden wird ein Beispiel des erfindungsgemäßen Rodelschlittens anhand der Zeichnungen näher erläutert. Es zeigen:
- Fig. 1: eine funktionelle Darstellung des Lenkvorgangs des Rodelschlittens,
- Fig. 2: einen Längsschnitt durch den Rodelschlitten und
- Fig. 3: eine Vorderansicht des Rodelschlittens in der in **Figur 2** gezeigten Blickrichtung III, wobei die Schlittenkufen geschnitten dargestellt sind.

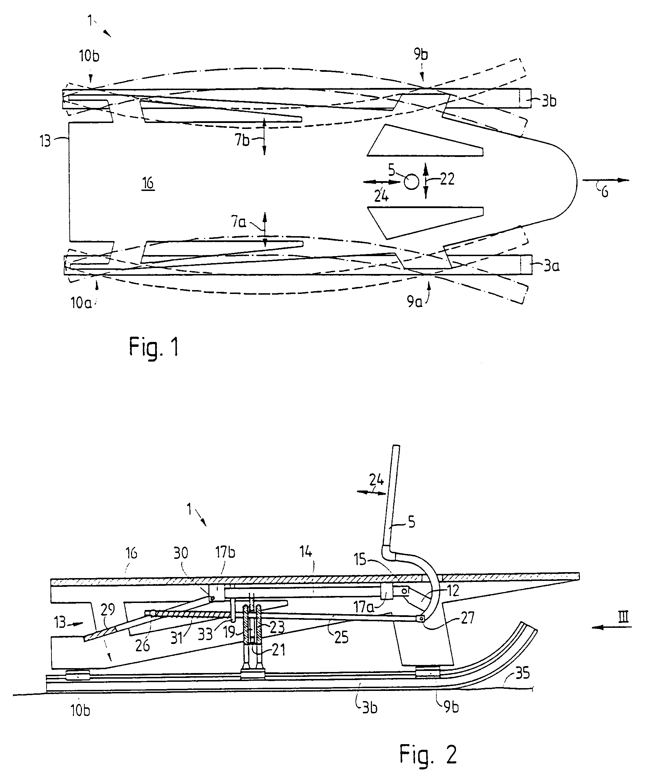

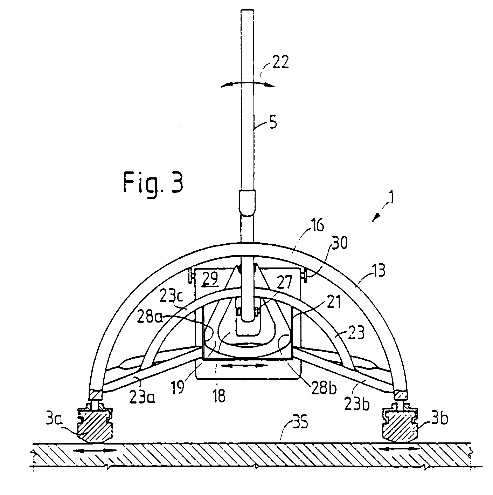

In **Figur 1** ist der Lenkvorgang an einem Schlitten **1** mit einer linken und einer rechten seitlichen elastischen Kufe **3a** und **3b** dargestellt. Mittels einem im vorderen Teil des Schlittens **1** angeordneten, über die Schlittensitzfläche **16** hinausragenden Schwenkhebel **5** wird über eine in den **Figuren 2** und **3** dargestellte Kraftübertragungseinheit eine senkrecht zur Schlittenfahrtrichtung **6** und parallel zur Gleitebene der Kufen **3a** und **3b** wirkende Kraft **7a** und **7b** auf die Kufen **3a** und **3b** in der Mitte zwischen deren vorderen und hinterer Lagerung **9a/9b** und **10a/10b** am Schlittengrundkörper **13** übertragen. Die in **Figur 1** dargestellten seitlichen Auslenkungsmöglichkeiten der Kufen **3a** und **3b** sind stark überhöht dargestellt. Da die tatsächliche seitliche Kufenauslenkung in der Schlittenfahrt für eine Kurvenfahrt nur klein gegenüber der Kufenlänge zwischen den beiden Lagerungen **9a/9b** und **10a/10b** ist, werden die Kufen kreisförmig dem zu fahrenden Kurvenradius entsprechend ausgelenkt.

Der Schwenkhebel **5** ist mittels eines als Hebelarm wirkenden Flansches **12** an einem am Ende einer parallel zur Schlittenlängsachse, unterhalb der Schlittensitzfläche **16** gelagerten Welle **14** angeordneten Lager **15** parallel zur Schlittenlängsachse schwenkhar gelagert. Durch Schwenken des Schwenkhebels **5** nach links bzw nach rechts in Bezug auf die Schlittenlängsachse wird die Welle **14** gedreht. Die Welle **14** ist mit zwei Lagern **17a** und **17b** am Schlittengrundkörper **13** gelagert. Mit dem hinteren Teil der Welle **14** ist ein in **Figur 3** gezeigtes, von der Welle **14** wegstehendes, mit einem Durchbruch **18** versehener Formteil **19** fest verbunden. Der Formteil **19** sitzt elastisch federnd eingeklemmt und somit spielfrei in einem U-förmigen Halter **21**, der mit einem Gestänge **23** verbunden ist, welches zur Übertragung der Kufenbiegekraft **7a** und **7b** mittig an den Kufen **3a** und **3b** angreift. Die Auslenkkräfte **7a** und **7b** werden somit vom Schwenkhebel **5** über den Flansch **12**, das Lager **15** als Drehbewegung auf die Welle **14** und von dieser über den Formteil **19**, den U-förmigen Halter **21** und das Gestänge **23** auf die Mitte der Kufen **3a** und **3b** übertragen.

Das Lager **15** ist derart ausgestaltet, daß eine Schwenkbewegung **22** des Schwenkhebels **5** zur Lenkung des Schlittens **1** möglichst spielfrei in eine Drehbewegung der Welle **14** übertragen wird. Die Übertragung der Schwenkbewegung des mit der Welle **14** starr verbundenen Formteils **19** auf den U-förmigen Halter **21** wird durch die Formgebung des Formteils **19** erreicht, wobei die während des Lenkvorganges an den Schenkeln des Halters **21** anliegenden, einander gegenüberliegenden Kurvenbereiche **28a** und **28b** des Formteils **19** während des Schwenkvorgangs immer gleichen Abstand voneinander haben, d. h. als Kreissegmente ausgebildet sind. Die Spielfreiheit wird dadurch erreicht, daß die Kurvenbereiche **28a** und **28b** des Formteils **19** elastisch zwischen den Schenkeln des U-förmigen Halters **21** eingespannt sind. Die elastische "Spannkraft" der Schenkel ist so ausgewählt, daß die Kurvenbereiche **28a** und **28b** elastisch eingeklemmt, jedoch innerhalb des Halters **21** schwenkbar sind, aber Stöße von Fahrbahnunehenheiten, welche über die Kufen **3a** bzw. **3b** und das Gestänge **23** auf den Halter **21** übertragen werden, keinen Spalt zwischen Formteil **19** und Halter **21** erzeugen. Zur Verminderung der Einwirkung von Stößen auf die Spielfreiheit der Lenkung trägt ferner der Gestängebogen **23a** bei, der die beiden an den Kufen **3a** und **3b** angreifenden Gestängeholme **23b** und **23c** verbindet.

Am unterhalb der Schlittensitzfläche **16** befindlichen Teil des Schwenkhebels **5**, der durch seinen Abstand von der Welle **14** als Hebelarm wirkt, ist eine Stange **25** durch ein Lager **27** derart gelagert, daß eine Vor-/Rückwärtsschwenkung **24** des freien Schwenkhebelendes eine lineare Vor-/rückwärtshewegung der Stange **25** erzeugt. Das andere Ende der Stange **25** ist mittels einem Lager **26** annähernd in der Mitte einer Bremsklappe **29** gelagert, welche an einem Lager **30** in der Nähe des Lagers **17b** senkrecht zur Schlittenlängsachse schwenkbar gehalten ist. Über dem dem Lager **26** benachbarten Ende der Stange **25** steckt eine Zugfeder **31**, deren eines Ende am Lager **26** und deren anderes Ende an einem mit der Unterseite der Sitzfläche **16** fest verbundenen Flansch **33** befestigt ist.

Durch Rückwärtsziehen des Schwenkhebelendes wird die Stange **25** nach vorn geschoben und die Bremsklappe nach unten geschwenkt und gegen die schlittenfahrbahn **35** zum Bremsen der Schlittenfahrt gedrückt. Die Feder **31** dient dazu die Bremsklappe **29** selbsttätig bei freiem, nicht nach vorn gedrücktem Schwenkhebel **5** gegen den Flansch **33** zu ziehen und damit die Bremsklappe **29** nach unten gegen die Schlittenfahrbahn **35** zu pressen sowie den Schwenkhebel **5** in eine annähernd vertikale Lage zurückzuziehen. Wird der Schwenkhebel **5** losgelassen, so springt er immer in die vertikale Lage und die Bremsklappe **29** wird nach unten gedrückt.

Wie aus **Figur 3** zu ersehen ist, wurde die Sitzfläche **16** im Querschnitt halbrund ausgebildet. Hierdurch ergibt sich ein angenehmens und sicheres Sitzen auf dem Schlitten.

Die Bremsklappe **29** ist nur senkrecht zur Schlittenlängsachse schwenkbar und wird beim seitlichen Schwenken **22** des Schwenkhebels **5**, obwohl mit diesem verbunden, nicht mitgeschwenkt. Sie bleibt bei Lenken immer in ihrer Lage, um eine optimale wirkungsvolle Bremsung ausführen zu können. Die geringe Verwindung zwischen dem durch den Schwenkhebel **5** senkrecht zur Schlittenlängsachse schwenkbaren Lager **27** und der nur in Fahrtrichtung schwenkbaren Bremsklappe **29** wird durch die Stange **25** bzw. dem Spiel der Lager **27** und **26** aufgenommen.

Um den Schlitten **1** gut z. B. auf dem Dach eines Auto transportieren zu können, kann der Schwenkhebel **5** nach vorn geklappt werden, so daß er auf der Oberfläche des Sitzfläche **16** aufliegt. Die Bremsklappe **29** liegt dann an der Unterseite der Schlittensitzfläche **16** an. Die Möglichkeit den Schwenkhebel **5** vollständig auf die Schlittensitz fläche **16** zu schwenken, gestattet bei der Verwendung des Schlittens **1** ein "Überrutschen" der Schlittenoberfläche durch den Schlittenfahrer, sollte der Schlitten **1** z. B. an einem Erdhügel o. ä. hängen bleiben.

Anstelle des Schwenkhehels **5** können auch andere Elemente, wie z. B. rund, halbrunde oder anders geformte steuerräder, sowie bei Bedienungen mit den Füßen z. B. Fußtritte mit umgelenkten Seilzügen verwendet werden.

## Patentansprüche

1. Rodelschlitten (1) mit Kufen (3a, 3b), wobei die Kufen (3a, 3b) zur Lenkung des Schlittens (1) mittels einer Verstelleinrichtung (12, 14, 19, 21, 23) verformbar sind, und mit einem auf die Verstelleinrichtung wirkenden Lenkorgen (5), gekennzeichnet durch eine Zwangsbremsvorrichtung (29, 31, 33), welche bei losgelossenem Lenkorgan (5) ein Bremsorgan (29) selbsttätig nach unten gegen die Schlittenfahrbahn (35) drückt.

2. Rodelschlitten **(1)** nach Anspruch 1, **dadurch gekennzeichnet**, daß die Kufen **(3a, 3b)** beidseits am Schlittengrundkörper **(13)** in dessen vorderen und hinteren Teil gelagert sind, und die Verstelleinrichtung zwischen den jeweiligen vorderen und hinteren Kufenlagern **(9a, 9b; 10a, 10b)** seitlich auf die Kufen **(3a, 3b)** derart einwirkt, daß diese je nach der gewünschten Lenkrichtung nach der einen oder anderen Seite elastisch gekrümmt werden, wobei der Kufenkrümmungsradius entsprechend dem für eine Kurvenfahrt vom Schlitten **(1)** zu fahrenden Kurvenradius einstellhar ist.

3. Rodelschlitten **(1)** nach Anspruch 1 oder 2, **gekennzeichnet durch** ein mit der Verstelleinrichtung verbundenes, als Schwenkhebel **(5)** ausgebildetes Lenkorgan, bei dessen zur Schlittenlängsachse seitlichem Schwenken die Kufen **(3a, 3b)** durch die Verstelleinrichtung **(12, 24, 19, 21, 23)** verformt werden.

4. Rodelschlitten nach den Ansprüchen 2 und 3, **dadurch gekennzeichnet**, daß das Lenkorgan **(5)** auf eine das Bremsorgan **(29)** betätigende, insbesondere federbelastete Kraftübertragungvorrichtung **(25)** wirkt.

5. Rodelschlitten nach Anspruch 3 oder 4, **dadurch gekennzeichnet**, daß das Lenkorgan **(5)** an einer in Schlittenlängsrichtung verlaufenden Welle **(14)** angeordnet ist, die ein starr mit ihr verbundenes erstes Kraftübertragungselement **(19)** aufweist, welches über ein zweites Kraftübertragungselement (21, 23) die seitliche Verformung der beiden Kufen **(3a, 3b)** erzeugt.

6. Rodelschlitten nach Anspruch 5, **dadurch gekennzeichnet**, daß das zweite Kraftübertragungselement **(21, 23)** ein kraftübertragendes, mit den Kufen **(3a, 3b)** verbundenes Gestänge **(23)** und eine elastische Klammer **(21)** aufweist, welche das mit der Welle **(14)** starr verbundene erste Kraftübertragungselement **(19)** derart elastisch umklammert, daß es **(19)** in der Klammer **(21)** verdrehbar ist und eine Drehbewegung der Welle **(14)** spielfrei als eine lineare Bewegung auf das Gestänge **(23)** überträgt.

7. Rodelschlitten nach Anspruch 5 oder 6, **dadurch gekennzeichnet**, daß das als Schwenkhebel ausgebildete Lenkorgan **(5)** an der Welle **(14)** in Schlittenlängsrichtung, vorzugsweise bis zur vollständigen Auflage auf der Schlittenoberfläche **(16)** schwenkbar gelagert ist, um bevorzugt ein Überrutschen bzw. einen Transport auf einem Autodach zu ermöglichen.

8. Rodelschlitten nach den Ansprüchen 4 und 7, **dadurch gekennzeichnet**, daß das als Schwenkhebel ausgebildete Lenkorgan **(5)** einen gegenüber seiner Lagerung an der Welle **(14)** versetzten, einen Hebelarm bildenden Kraftangriffsort **(27)** für die Kraftübertragungsvorrichtung **(25)** des Bremsorgans **(29)** hat.

9. Rodelschlitten nach einem der Ansprüche 1 bis 8, **gekennzeichnet durch** eine im Querschnitt halbrund ausgebildete Sitzfläche **(16)**.

## Claims

1. A sled with runners (3a, 3b), wherein said runners (3a, 3b) are deformable by means of adjusting means (12, 14, 19, 21, 23) for steering said sled (1), and with a steering member (5) acting on said adjusting means, characterized by an automatic braking means (29, 31, 33), which when the steering member (5) is unrestrained will automatically force a braking member (29) down against a runway (35) for said sled.

2. The sled (1) according to claim 1, characterized in that said runners (3a, 3b) are mounted in the front and rear portions of a body (13) of said sled on both sides thereof, and said adjusting means act laterally on said runners (3a, 3b) between front and rear hinges (9a, 9b; 10a, 10b) respectively in such a manner that in dependence on the desired steering direction said runners are resiliently curved to one side or the other and the radius of curvature of said runners is adjustable to correspond to the radius of the corner to be turned by said sled (1).

3. The sled (1) according to claim 1 or 2, characterized by a steering member, consisting of a pivoted lever (5) and being connected to said adjusting means, pivotally moveable laterally with respect to a longitudiual axis of said sled to cause said runners (3a, 3b) to be deformed by said adjusting means (12, 14, 19, 21, 23).

4. The sled according to claims 2 and 3, characterized in that said steering member (5) acts on an, especially spring biased, force-transmitting means (25) actuating said braking member (29).

5. The sled according to claims 3 or 4, characterized In that said steering member (5) is mounted on a shaft (14), which extends in said longitudinal direction of said sled and comprises a first rigidly connected orce-transmitting means (19); which by means of a second force-transmitting means (21, 23) effect the lateral deformation of said two runners (3a, 3b).

6. The sled according to claim 5; characterized in that said second force-transmitting means (21, 23) comprise a force-transmitting linkage (23), which is connected to said runners (3a 3b), and a resilient clamp (21), by which said first force-transmitting means (19) being rigidly connected to said shaft (14) is resiliently clamped in such a manner that it (19) can rotate in said clamp (21) and convert a rotary movement of said shaft (14) without a backlash to a linear movement of said linkage (23).

7. The sled according to claims 5 or 6, characterized in that said steering member (5) consisting of said pivoted lever is mounted pivotally in the longitudinal direction of said sled on said shaft (14) preferably until it completely rests on a seat (16) of said sled to preferably enable a slip over or a transport on a car's roof.

8. The sled according to claims 4 and 7, characterized in that said steering member (5) consisting of said pivoted lever has a force engagement (27) for said force-transmitting means (25) of said breaking member (29), forming a lever arm being spaced from its hinge at said shaft (14).

9. The sled according to any of claims 1 to 8, characterized by said seat (16) having a semi-circular cross section.

## Revendications

1. Luge (1) avec patins (3a, 3b), lesdits patins (3a, 3b) étant déformables pour le guidage de la luge (1) à l'aide d'un dispositif de réglage (12, 14, 19, 21, 23) et avec un organe de guidage (5) agissant sur le dispositif de réglage, caractérisée par un dispositif de freinage automatique (29, 31, 33) qui dans le cas où l'organe de guidage (5) est desserré, presse automatiquement un organe de freinage (29) vers le bas contre la piste de luge (35.

2. Luge (1) selon la revendication 1, caractérisée en ce que les patins (3a, 3b) sont montés des deux côtés du corps de base (13) de la luge dans sa partie avant et sa partie arrière et en ce que le dispositif de réglage entre les paliers respectifs avant et arrière (9a, 9b , 10a, 10b) des patins agit latéralement sur les patins (3a, 3b) de telle sorte que ces derniers sont respectivement courbés de manière élastique selon la direction souhaitée, vers l'un ou l'autre côté, le rayon de courbure des patins pouvant être réglé conformément au rayon du virage que la luge (1) doit prendre.

3. Luge (1) selon la revendication 1 ou la revendication 2, caractérisée par un organe de guidage assemblé avec le dispositif de réglage, conçu en tant que levier pivotant (5) et dont le pivotement latéral par rapport à l'axe longitudinal de la luge a pour effet la déformation des patins (3a, 3b) par le dispositif de réglage (12, 14, 19, 21, 23).

4. Luge selon les revendications 2 et 3, caractérisée en ce que l'organe de guidage (5) agit sur un dispositif de transmission de force (25) qui actionne l'organe de freinage (29) et qui est notamment à ressorts.

5. Luge selon la revendication 3 ou la revendication 4, caractérisée en ce que l'organe de guidage (5) est disposé sur un arbre (14) monté dans le sens longitudinal de la luge et présentant un premier élément de transmission de force (19) assemblé de manière fixe avec lui, ce premier élément de transmission de force (19) produisant la déformation latérale des deux patins (3a, 3b) par l'intermédiaire d'un second élément de transmission de force (21, 23)

6. Luge selon la revendication 5, caractérisée en ce que le second élément de transmission de force (21, 23) présente une tringle (23) transmettant la force et assemblée avec les patins (3a, 3b) ainsi qu'une bride de fixation (21) élastique qui serre de manière élastique le premier élément de transmission de force (19) assemblé de manière fixe avec l'arbre (14) de telle sorte que ledit premier élément de transmission de force peut pivoter dans la bride de fixation (21) et qu'il transmet un mouvement de rotation de l'arbre (14) sans jeu, en tant que mouvement linéaire sur la tringle (23).

7. Luge selon la revendication 5 ou la revendication 6, caractérisée en ce que l'organe de guidage (5) conçu en tant que levier pivotant est monté à rotation sur l'arbre (14) dans le sens longitudinal de la luge, de préférence jusqu'à l'appui complet sur la surface (16) de la luge pour permettre de manière préférée un glissement sur la surface ou un transport sur le toit d'une voiture.

8. Luge selon les revendications 4 et 7, caractérisée en ce que l'organe de guidage (5) conçu en tant que levier pivotant a un emplacement d'application de la force (27) décalé par rapport à son logement sur l'axe (14), formant un bras de levier et destiné au dispositif de transmission de force (25) de l'organe de freinage (29).

9. Luge selon l'une quelconque des revendications 1 à 8, caractérisée par une surface de siège (16) dont la section transversale est semi-circulaire.
